Europäisches Patentamt

European Patent Office

Office européen des brevets

(19)

(11) **EP 1 361 578 A1**

(12) **EUROPEAN PATENT APPLICATION**

(43) Date of publication:
**12.11.2003 Bulletin 2003/46**

(51) Int Cl.⁷: **G11B 27/36**, G11B 5/596

(21) Application number: **03010607.4**

(22) Date of filing: **12.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.05.2002 KR 2002026031**

(71) Applicant: **SAMSUNG ELECTRONICS CO., LTD.**
**Suwon-City, Kyungki-do (KR)**

(72) Inventor: **Kim, Jae-hyeong**
**Suji-eup, Yongin-si, Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Method and apparatus for preventing off-tracking in hard disc drive**

(57)     Provided are a method and apparatus for preventing off tracking from occurring in a hard disc drive that has at least one track formed using servo signals. The method includes a method of preventing off tracking from occurring when a hard disc drive drives a hard disc having at least one track formed by servo sectors on which servo signals are recorded, the method including checking whether the width of the track is uneven using burst regions A, B, C, and D, the burst regions A through D being included on each servo signal, and preventing the occurrence of off tracking when the width of the track is not even. Accordingly, it is possible to prevent a potential occurrence of off tracking due to a track of an uneven width, thereby guaranteeing the reliability of a hard disc. Also, a track of uneven width with other tracks in the hard disc can be changed into a track of even width, thereby increasing the processing yield during manufacturing of the hard disc.

## FIG. 1

EP 1 361 578 A1

## Description

The present invention relates to a hard disc, and more particularly, to a method and apparatus for preventing off tracking from occurring when a hard disc drive operates.

An increase in the recording density of a hard disc requires precise positioning of a servo writer that writes a servo signal on a hard disc.

In general, a track is formed by servo signals that are written on a hard disc by a servo writer. To form tracks of even widths on the hard disc, a servo writer must precisely write servo signals on the hard disc. That is, the servo writer is required to move accurately without swaying during the writing of servo signals. If servo signals are not precisely written on a hard disc, i.e., the servo writer is shaken during the writing of the servo signals, it is possible to obtain tracks of different widths. When widths of tracks are not uniform, the position of data to be accessed by a head (not shown) of a hard disc drive may be changed when the head writes or reads data on or from a track. For instance, when the head is positioned on an $n+1^{th}$ track, data will be certainly recorded on an $n-1^{th}$ track if the width of each track is even. However, if the head is positioned at the $n+1^{th}$ track and the width of $n^{th}$ track is narrower than those of other tracks, data may be recorded in a border region between the $n-1^{th}$ track and $n-2^{th}$ track. Further, if the head is positioned at the $n+1^{th}$ track and the width of $n^{th}$ track is wider than those of other tracks, data may be recorded in a border region between the $n^{th}$ track and $n-1^{th}$ track. Accordingly, tracks of uneven widths may result in the occurrence of off tracking that causes data to be recorded in a border region between tracks.

It is the object of the present invention to provide a method for preventing the occurrence of off tracking due to unevenness of tracks widths formed on a hard disc, an apparatus for preventing the occurrence of off tracking, wherein the apparatus performs such a method, and a corresponding hard disc drive.

This object is solved by the subject matters of the independent claims.

Preferred embodiments are defined in the dependent claims.

According to one aspect of the above object, there is provided a method of preventing off tracking from occurring when a hard disc drive drives a hard disc having at least one track formed by servo sectors on which servo signals are recorded, the method including checking whether the width of the track is uneven using burst regions A, B, C, and D, the burst regions A through D being included on each servo signal, and preventing the occurrence of off tracking when the width of the track is not even.

According to another aspect of the above object, there is provided an apparatus for preventing off tracking from occurring when a hard disc drive drives a hard disc having at least one track formed of servo sectors on which servo signals are recorded, the apparatus including a width checking unit for checking whether the width of the track is even using burst regions A, B, C, and D written on each servo sector and outputting the checking result; and a controller for controlling the width measuring unit and preventing the occurrence of off tracking in response to the checking result.

The above aspects and advantages of the present invention will become more apparent by describing in detail preferred embodiments thereof with reference to the attached drawings in which:

FIG. 1 is a flowchart illustrating a method of preventing off tracking from occurring in a hard disc drive, according to an embodiment of the present invention;
FIG. 2 is an exterior view of a hard disc;
FIG. 3 is a diagram illustrating a format of each track of the hard disc of FIG. 2;
FIG. 4 is a flowchart illustrating a preferred embodiment of step 10 of FIG. 1 according to the present invention;
FIG. 5 is a flowchart illustrating a preferred embodiment of step 70 of FIG. 4 according to the present invention;
FIG. 6 is a diagram illustrating examples of servo sectors having burst regions A through D in a plurality of tracks;
FIG. 7 is a flowchart illustrating a preferred embodiment of step 98 of FIG. 5 according to the present invention;
FIG. 8 is a graph illustrating variations in first through fourth absolute values, and a first or second addition value according to a change in the widths of the servo sectors;
FIG. 9 is a flowchart illustrating a preferred embodiment of step 12 of FIG. 1 according to the present invention;
FIG. 10 is a block diagram of an apparatus for preventing off tracking from occurring in a hard disc drive, the apparatus performing a method of preventing off tracking from occurring in a hard disc drive, according to the present invention; and
FIGS. 11(a) and (b) are graphs illustrating off tracking occurring in a hard disc drive.

The present invention will now be described more fully with reference to the accompanying drawings, in which preferred embodiments of the invention are shown. This invention may, however, be embodied in many different forms and should not be construed as being limited to the embodiments set forth herein; rather, these embodiments are provided so that this disclosure will be thorough and complete, and will fully convey the concept of the invention to those skilled in the art. The same reference numerals in different drawings represent the same element.

Hereinafter, a method for preventing off tracking from occurring in a hard disc drive, according to the present invention, will be described with reference to accompanying drawings.

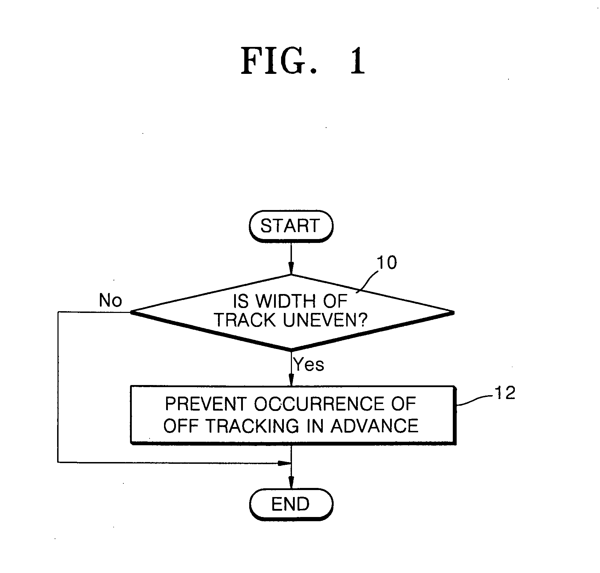

FIG. 1 is a flowchart illustrating a method for preventing off tracking from occurring when a hard disc drive operates, according to the present invention. The method of FIG. 1 includes steps 10 and 12 of preventing the occurrence of off tracking by checking if widths of tracks are even or not.

More specifically, in step 10 of the method of FIG. 1, whether widths of tracks are even is first checked using burst regions A, B, C, and D which are included in each of servo sector, respectively.

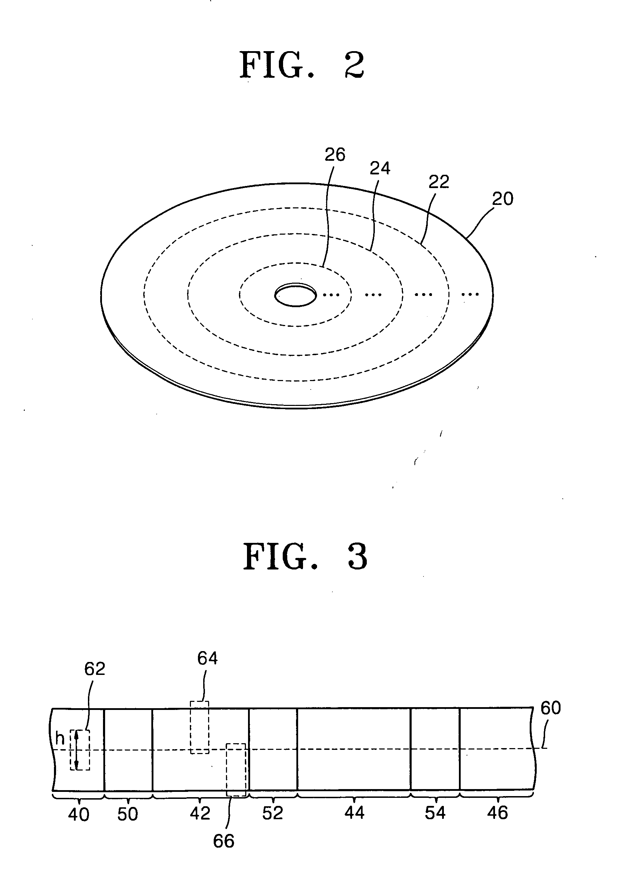

FIG. 2 is an exterior view of a hard disc 20 that consists of a plurality of tracks ..., 22, .., 24, ..., and 26. FIG. 3 is a partial diagram illustrating a format of each track of the hard disc 20 of FIG. 2, each track being composed of data sectors ..., 40, 42, 44, 46, ..., and servo sectors ..., 50, 52, 54, ....

In general, a servo writer writes a plurality of servo signals on the servo sectors ..., 50, 52, 54, ... of each track formed on the hard disc 20 of FIG. 2. The writing of the servo signals on the plurality of servo sector ..., 50 52, 54, ... results in the formation of ring-shaped tracks as shown in FIG. 2. Each of the servo sectors ..., 50, 52, 54, ... includes burst regions A, B, C, and D in which track numbers are stored. Also, a hard disc drive searches for a central line 60 of a track using the burst regions recorded on each servo sector..., 50, 52, 54, or..., and then moves a head (not shown) on the central line 60 of a track.

A preferred embodiment of step 10 of FIG. 1 will now be described.

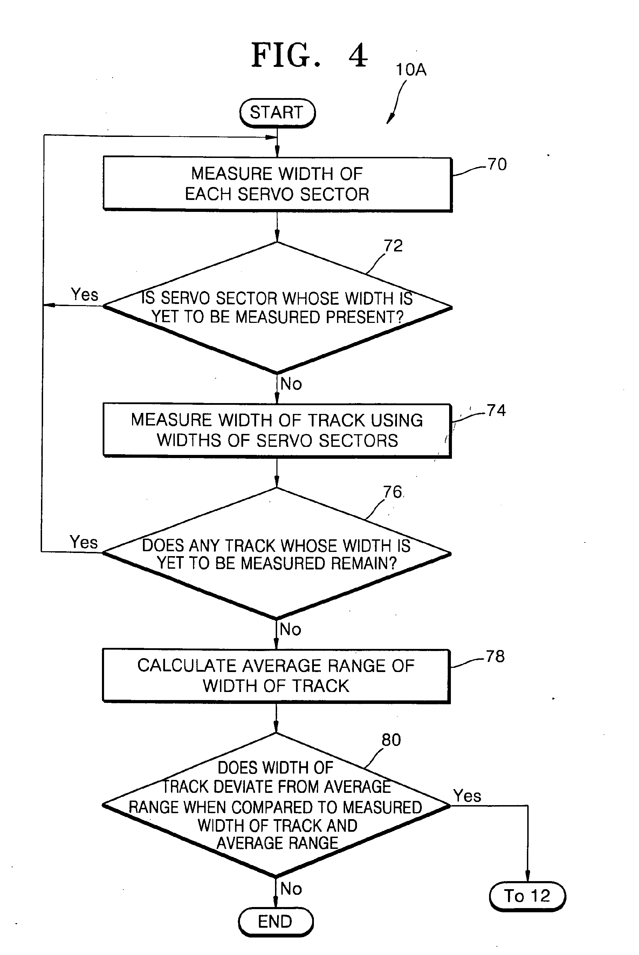

FIG. 4 is a flowchart illustrating a preferred embodiment 10A of step 10 of FIG. 1, according to the present invention. The embodiment 10A consists of steps 70 through 78 of calculating an average range of widths of tracks and step 80 of comparing the average range with the width of each track.

To perform step 10 included in a method of preventing the occurrence of off tracking according to the present invention, a head of a hard disc drive is moved a certain distance in a first direction toward which the number of tracks is increased, is then moved a certain distance in a second direction toward which the number of tracks is reduced, and a width of each servo sector is measured using burst regions A, B, C, and D that are read by the moving head, in step 70. The narrower the width of the head, the more closely the certain distance approximates a quarter of the width of the track. For instance, the certain distance may correspond to a quarter of the width of a track. The head of the hard disc drive reads tracks in an ascending order, i.e., from a track having a smallest number to a track having a largest number.

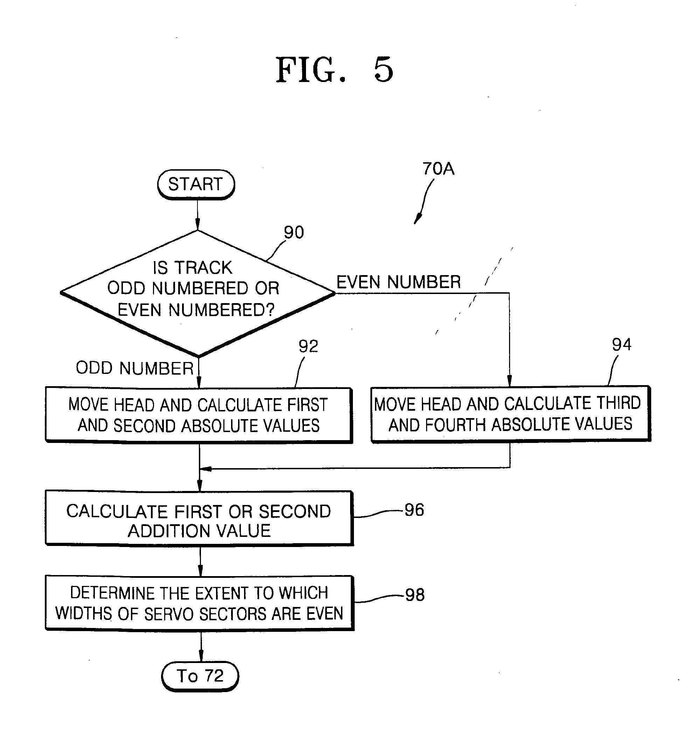

FIG. 5 is a flowchart illustrating a preferred embodiment 70A of step 70 of FIG. 4, according to the present invention. The embodiment 70A of step 70 includes steps 90 through 94 of calculating first through fourth absolute values with the moving the head and steps 96 and 98 of calculating first and second addition values and checking whether widths of servo sectors are even or not.

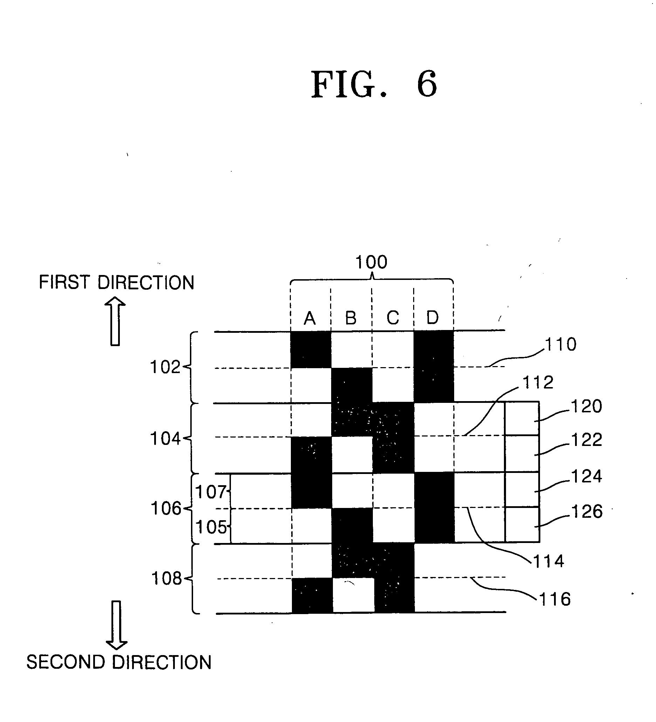

FIG. 6 is a diagram illustrating examples of servo sectors 100 having burst regions A through D in a plurality of tracks. Referring to FIG. 6, shade portions denote regions where signals exist and non-shade portions denote regions where signals do not exist.

Referring to FIG. 6, to perform step 70 of FIG. 4, whether a track is an even numbered track 102 or 106, or an odd numbered track 104 or 108, is checked in step 90. In step 92, if it is determined in step 90 that the track is an odd numbered track 104 or 108, the head of a hard disc drive is moved, in the first direction, to a certain distance 120 from a central line 112 or 116 of the track 104 or 108, and a first absolute value $T1$ is obtained by subtracting the burst region $D$ from the burst region $B$, which are read by the moving head, using the following Equation 1. That is, if the track shown in FIG. 3 is an odd numbered track, a head 62, which has a width h and is positioned at the central line 60 of the track, is moved a certain distance in the first direction and the burst regions $B$ and $D$ are read by the moving head 64.

Equation 1 is as follows:

$$T1 = |B\text{-}D| \qquad (1)$$

wherein $B$ and $D$ denote shade portions of the burst regions $B$ and $D$ shown in FIG. 6

Also, in step 92, the head of a hard disc drive is moved in the second direction a predetermined distance 122 from the central line 112 or 116 of an odd-numbered track 104 or 108, and a second absolute value $T2$ is calculated by subtracting the burst region D from the burst region A, which are read by the moving head, using the following Equation 2. That is, when the track of FIG. 3 is an odd numbered track, the head 62, which is positioned at the central line 60 of the track, is moved to a certain distance in the second direction and the burst regions A and D are read by a moving head 66.

$$T2 = |A\text{-}D| \qquad (2)$$

wherein $A$ denotes a shade portion of the burst region $A$ shown in FIG. 6.

However, when the track is an even numbered track 102 or 106, the head is moved in the first direction a certain distance 124 from a central line 110 or 114 of the track 102 or 106 and a third absolute value $T3$ is calculated by subtracting the burst region C from the burst region $A$ that are read by the moving head, using the following Equation 3, in step 94. That is, when the track of FIG. 3 is an even-numbered track 102 or 106, the head 62, which is positioned at the central line 60 of the track, is moved in the first direction a certain distance and the burst regions A and C are read by a moved head 64.

$$T3 = |A-C| \qquad (3)$$

wherein C denotes a shade portion of the burst region C of FIG. 6.

Also, in step 94, the head is moved in the second direction 126 a certain distance 126 from the central line 110 or 114 of the even numbered track 102 or 106, and a fourth absolute value $T4$ is calculated by subtracting the burst region C from the burst region $B$ that are read by the moving head, using the following Equation 4. That is, when the track of FIG. 3 is an even numbered track, the head 62, which is positioned at the central line 60 of the track, is moved in the second direction to a certain distance and the burst regions $B$ and C are read by a moving head 66.

$$T4 = |B-C| \qquad (4)$$

In step 96, the first and second absolute values $T1$ and $T2$ are added to calculate a first addition value after step 92, or the third and fourth absolute values T3 and $T4$ are added to calculate a second addition value after step 94. After step 96, the extent to which widths of servo sectors are even is determined using the first or second addition value and then step 72 is performed, in step 98.

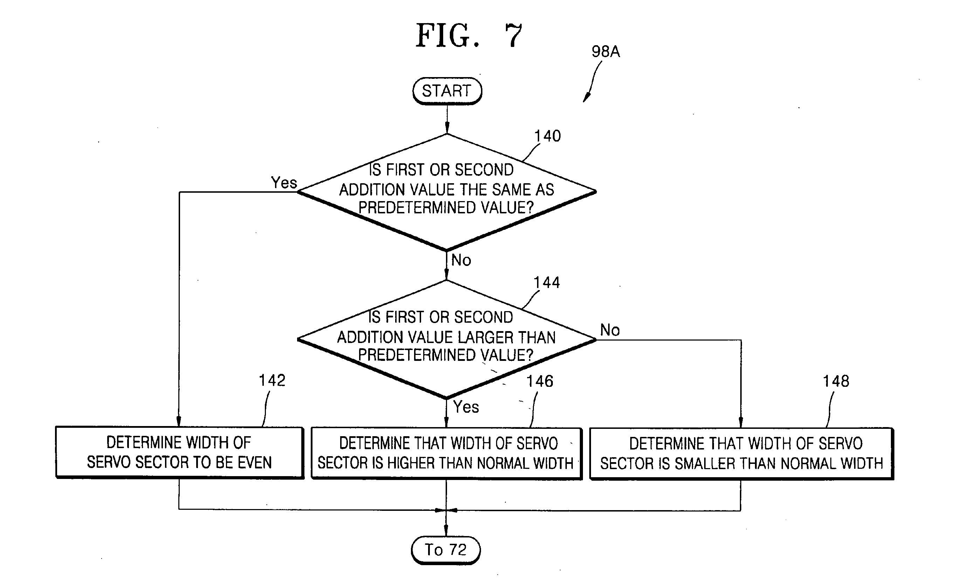

FIG. 7 is a flowchart illustrating a preferred embodiment 98A of step 98 of FIG. 5 according to the present invention. The embodiment 98A includes steps 140 through 148 of comparing the first or second addition value with a predetermined value and determining whether widths of servo sectors are even based on the comparison result.

Referring to FIG. 7, in order to perform step 98 of FIG. 5, whether the first or second addition value is the same as a predetermined value is checked in step 140. If it is determined in step 140 that the first or second addition value is the same as the predetermined value, the widths of the servo sectors are regarded as being even and step 72 is performed, in step 142.

However, if the first or second addition value is not the same as the predetermined value, whether the first or second addition value is larger than the predetermined value is checked in step 144. If the first or second addition value is larger than the predetermined valued, the widths of the servo sectors are regarded as higher than a normal width and step 72 is performed in step 146. However, if the first or second addition value is smaller than the predetermined value, the widths of the servo sectors are regarded as smaller than the normal width and step 72 is performed, in step 148.

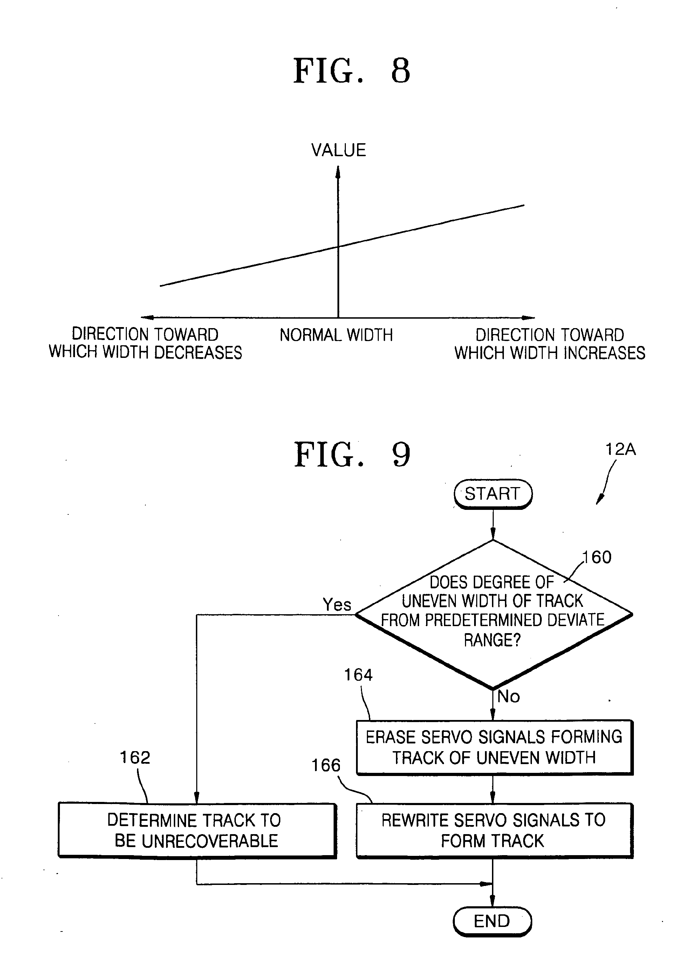

FIG. 8 is a graph illustrating variations in the first, second, third or fourth absolute value, the first or second addition value according to a change in the width of a servo sector. Referring to FIG. 8, an x-axis indicates a variation in the width of a servo sector, and a y-axis indicates a variation in the first, second, third or fourth absolute values, or the first or second addition value.

As shown in FIG. 8, the more the width of a servo sector increases compared with a normal width, the larger the first, second, third, or fourth absolute values $T1$, $T2$, $T3$, or $T4$ is, and the more the width of a servo sector decreased compared with the normal width, the smaller the first, second, third, or fourth absolute values $T1$, $T2$, $T3$, or $T4$ is. Similarly, as shown in FIG. 8, the more the width of a servo sector increases compared with the normal width, the larger the first or second addition value is, and the reverse is also true.

For instance, if the width of the even numbered track 106 of FIG. 6 is even to the widths of the other tracks, the fourth absolute value $T4$, which is obtained by subtracting the shade portion $C$ of the burst region C from the shade portion $B$ of the burst region $B$, is reduced as shown in FIG. 8, when a lower half width 105 of the track 106 with regard to the central line 114 decreases. That is, when the width 105 decreases, the width of the shade portion $B$ also decreases but the width of the shade portion $C$ is maintained. A reduction in the fourth absolute value $T4$ makes the second addition value be smaller than a predetermined value. In this case, the width of a servo sector is determined to be decreased.

However, if the upper half width 107 of the track 106 of FIG. 6 with regard to the central line 114 increases, the third absolute value $T3$, which is obtained by subtracting the dark portion $C$ of the burst region C from the dark portion $A$ of the burst region $A$, increases as shown in FIG. 8. That is, when the width 107 increases, the width of the dark portion $A$ also increases, but the width of the shade portion $C$ is maintained. An increment in the third absolute value $T3$ makes the second addition value be larger than the predetermined value. In this case, the width of a servo sector is determined to have increased.

Meanwhile, after step 70, it is checked if the track includes a servo sector whose width is not measured, in step 72. If a track has N servo sectors whose widths are to be measured, it is checked whether all of the widths of the N servo sectors are measured.

If it is determined in step 72 that there are servo sectors whose widths are not measured, step 70 is performed. Here, in step 70, the widths of servo sectors whose widths are not measured are measured. However, if it is determined in step 72 that there is no servo sector whose widths are not measured, a width of a track made of servo sectors is measured using the widths of the servo sectors, which are measured in step 70, in step 74.

After step 74, it is checked whether measurement of all of the widths of tracks, which are to be measured, formed on the hard disc 20 is complete, in step 76. If there are tracks whose widths are yet to be measured, the method returns to step 70 to perform steps 70 through 74 on the remaining tracks. However, when there is no track whose width is to be measured, an average range of the widths of the tracks is calculated using the widths of the tracks, which are measured in step 74, in step 78. The average range is determined using an average value of the measured widths of the tracks, in consideration of a predetermined error.

After step 78, whether or not a width of each track falls within the average range is checked in step 80. If the widths of all of the tracks fall within the average range, the widths of these tracks are regarded as being even. Therefore, a method of preventing off tracking from occurring in the hard disc drive, according to the present invention, illustrated in FIG. 1 or 4 is terminated.

However, if the width of a track does not fall within the average range, i.e., if there is a track of an uneven width, this track may cause off tracking to occur in the hard disc drive. Therefore, actions of preventing the occurrence of off tracking in advance are taken in the track in step 12 illustrated in FIG. 1.

Hereinafter, embodiments of step 12 of FIG. 1 according to the present invention will be described with reference to the accompanying drawings.

FIG. 9 is a flowchart illustrating one embodiment, i.e., step 12A, of step 12 of FIG. 1, according to the present invention. Step 12A includes steps 160 through 166 of recovering tracks of uneven widths in consideration of degrees of uneven widths. According to the embodiment 12A of the present invention, when the widths of tracks are uneven, whether or not a degree of the uneven width of a track falls within a predetermined range is checked in step 160. If the uneven degree does not fall within the predetermined range, it is determined that the uneven width of the track cannot be recovered in step 162. However, if the uneven degree falls within the predetermined range, servo signals, which form the track of the uneven width, are erased in step 164. After step 164, the track formed by the erased servo signals is again formed on the hard disc in step 166.

According to another embodiment of step 12 according to the present invention, steps 160 and 162 may not be included in step 12A of FIG. 9. More specifically, when it is determined in step 10 of FIG. 1 that the hard disc has a track of an uneven width, servo signals, which form the track of an uneven width, are erased in step 164. After step 164, servo signals are again written on the hard disc so as to form a track of an even width, instead of the track erased when erasing the servo signals, in step 166.

Still another embodiment of step 12 according to the present invention may further include, after step 162, steps (not shown) of checking if a total number of unrecoverable tracks of the hard disc is more than a predetermined value, and determining the hard disc having unrecoverable tracks the number of which is more than the predetermined value as an inferior one when the number of the unrecoverable tracks is more than the predetermined value.

The aforementioned method of preventing off tracking from occurring in a hard disc drive, according to the present invention, may be performed during testing of a hard disc having tracks formed by servo signals. In this case, a hard disc having tracks in which number of uneven widths is more than the predetermined value, is regarded as an inferior one in step 162, thereby preventing the occurrence of off tracking due to tracks of uneven widths.

Hereinafter, the structure and operations of an apparatus for preventing off tracking from occurring in a hard disc drive, according to the present invention, that performs the aforementioned method of preventing off tracking from occurring in a hard disc drive, will be described with reference to the accompanying drawings.

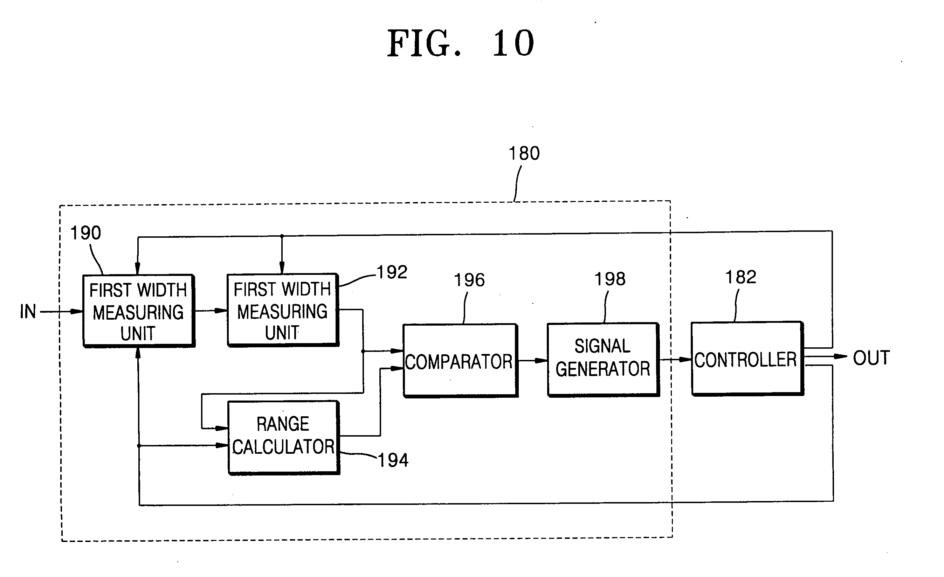

FIG. 10 is a block diagram of an apparatus for preventing off tracking from occurring in a hard disc drive, according to the present invention, the apparatus performing the method of preventing off tracking from occurring when the hard disc drive operates, according to the present invention. The apparatus of FIG. 10 includes a width checking unit 180 and a controller 182.

In order to perform step 10 of FIG. 1 under a control of the controller 182, the width checking unit 180 of FIG. 10 checks whether widths of tracks of a hard disc are even, using burst regions A, B, C, and D, which are input from a head of a hard disc drive via an input terminal *IN,* and outputs the checking result to the controller 182.

Next, to perform step 12 of FIG. 1, the controller 182 predicts occurrence of off tracking in response to the checking result input from the width checking unit 180 and takes actions of preventing the occurrence of off tracking in advance, according to the present invention. In detail, the controller 182 outputs, in response to the checking result, a first control signal and a second control signal to a servo writer (not shown) via an output terminal *OUT.* Then, to perform step 164, the servo writer erases servo signals, which form a track of an uneven width, in response to the first control signal input from the controller 182. To perform step 166, the servo writer writes servo signals on the hard disc to again form an erased track in response to the second control signal input from the controller 182.

To perform step 10A of FIG. 4, the width checking unit 180 includes first and second width measuring units 190 and 192, a range calculator 194, a comparator 196, and a signal generator 198.

To perform step 70, the first width measuring unit 190 of FIG. 10 determines the extent to which widths of servo sectors are even in response to a third control signal input from the controller 182, using the burst regions A through D which are read by a head of the hard disc drive and input from the input terminal *IN.* Next, to perform step 72, the controller 182 checks if the track has a servo sector whose width is yet to be measured, generates the third control signal based on the checking result, and outputs the generated third control signal to the first and second width measuring units 190 and 192. If the third control signal, which indicates there is a servo sector whose width is yet to be measured, is input from the controller 182 to the first width measuring unit 190, the first width measuring unit 190 may input the burst regions A through D present on the servo sector via the input terminal *IN.*

In order to perform step 74, the second width measuring unit 192 measures the width of a track, which consists of servo sectors, using the widths of the servo sectors input from the first width measuring unit 190, in response to the third control signal input from the controller 182. For this end, the first width measuring unit 190 may measure the widths of servo sectors and store the measuring result. In other words, when the second width measuring unit 192 perceives through the third control signal input from the controller 182 that recognizes that there is no servo sector whose width is not to be measured, the second width measuring unit 192 measures the width f track.

To perform step 76, the controller 182 checks whether measurement of all of the widths of tracks, which are to be measured, written on the hard disc 20 is complete, generates a fourth control signal based on the checking result, and outputs the fourth control signal to the first width measuring unit 190 and the range calculator 194, respectively. When the first width measuring unit 190 perceives through the fourth control signal input from the controller 182 that there is a track whose width is yet to be measured, the first width measuring unit 190 performs step 70 on these tracks.

To perform step 78, the range calculator 194 calculates an average range of the widths of tracks using the widths of the tracks input from the second width measuring unit 192, in response to the fourth control signal input from the controller 182, and outputs the calculated average range to the comparator 196. For this, the second width measuring unit 192 may measure the widths of the tracks of the hard disc 20 and store the measuring result. In other words, when the range calculator 194 perceives through the fourth control signal that there is no track whose width is yet to be measured, the range calculator 194 calculates an average range of the widths of the tracks.

To perform step 80, the comparator 196 compares the width of each track input from the second width measuring unit 192 with the average range input from the range calculator 194, and outputs the comparison result to the signal generator 198. In response to the comparison result input from the comparator 196, the signal generator 198 generates an information signal indicating whether the widths of the tracks are even and outputs the information signal as the checking result to the controller 182. More specifically, when it is recognized from the comparison result input from the comparator 196 that the widths of the tracks do not fall within the average range, the signal generator 198 outputs the information signal containing this fact to the controller 182. However, when it is recognized from the comparison result input from the comparator 196 that the widths of the tracks fall within the average range, the signal generator 198 outputs the information signal containing this fact to the controller 182. Accordingly, the controller 182 can check whether the widths of the tracks fall within the average range, based on the information signal.

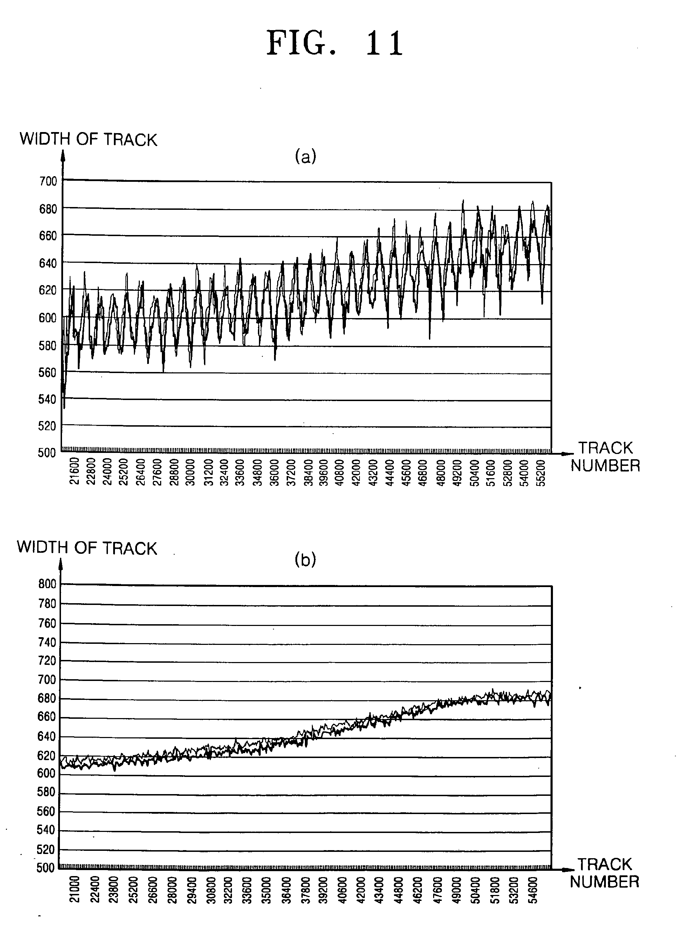

FIGS. 11(a) and (b) are graphs illustrating off tracking occurring when a hard disc drive operates. Referring to FIGS. 11(a) and (b), each X-axis indicates the number of a track, and each Y-axis indicates the width of a track.

If widths of tracks ..., 22, ..., 24, ..., 26, ... formed on the hard disc 20 are measured according to a track number, off tracking generally occurs at several tracks as shown in FIG. 11(a). In the graph of FIG. 11(a), a bold line denotes an upper half width of a track, and the other line denotes a lower half width of the track. However, it is possible to considerably reduce the occurrence of the off tracking as shown in FIG. 11(b) by erasing servo signals for a track having an uneven width using the method and apparatus of the present invention for preventing occurrence of off tracking and rewriting the servo signals on the hard disc 20 by a servo writer so as to form a new track of an even width. In the graph of FIG. 11(b), a bold line denotes an upper half width of a track and the other line denotes a lower half width of the track.

As described above, in a method and apparatus, according to the present invention, for preventing off tracking from occurring in a hard disc drive, a track of an uneven width with respect to other disc tracks, caused by imprecise positioning of a servo writer which writes servo signals on a hard disc, can be recovered into a track of an even width. Also, the method and apparatus can be used to detect and classify a hard disc having unrecoverable tracks of uneven widths as an inferior disc. Accordingly, it is possible to prevent any potential occurrence of off tracking due to a track of an uneven width, thereby guaranteeing the reliability of a hard disc. Further, uneven widths of tracks can be evenly recovered, thereby increasing a manufacturing yield of a hard disc.

## Claims

1. A method of preventing off tracking from occurring when a hard disc drive drives a hard disc having at least one track formed by servo sectors on which servo signals are recorded, the method comprising:

    (a) checking whether the width of the track is uneven using burst regions A, B, C, and D, the burst regions A through D being included on each servo signal; and

(b) preventing the occurrence of off tracking when the width of the track is not even.

2. The method of claim 1, wherein (a) comprises:

(a1) measuring the width of each servo sector using the burst regions A through D, the burst regions A through D are read through moving a head of the hard disc drive moved by a predetermined distance in first and second directions toward which the number of the track is increased and decreased, respectively;
(a2) checking whether the track has a servo sector whose width is yet to be measured, and returning to (a1) if it is determined that the servo sector whose width is yet to be measured is present;
(a3) measuring the width of the track having the servo sectors using the widths of the servo sectors, when the servo sector whose width is yet to be measured is not present;
(a4) checking if there is a track whose width is to be measured, and returning to (a1) when it is determined that there is a the track whose width is to be measured;
(a5) calculating an average range of the width of the track using the widths of the tracks, when there is no track whose width is to be measured; and
(a6) checking whether the width of each track falls within the average range,

wherein in (b), the width of the track is determined not to be even if the width of each track does not fall within the average range.

3. The method of claim 2, wherein (a1) comprises:

(a11) checking whether the track is an odd numbered track or an even numbered track;
(a12) calculating a first absolute value by moving the head in the first direction from the center of the track by the predetermined distance and subtracting the burst region D from the burst region B that are read by the moving head, and calculating a second absolute value by moving the head in the second direction from the center of the track by the predetermined distance and subtracting the burst region D from the burst region A that are read by the moving head, when the track is an odd numbered track, the first absolute value obtained by subtracting the burst region D from the burst region B and the second absolute value obtained by subtracting the burst region D from the burst region A;

(a13) calculating a third absolute value by moving the head in the first direction from the center of the track by the predetermined distance and subtracting the burst region C from the burst region A that are read by the moving head, and calculating a fourth absolute value by moving the head in the second direction from the center of the track by the predetermined distance and subtracting the burst region C from the burst region B that are read by the moving head, when the track is an even numbered track, the third absolute value obtained by subtracting the burst region C form the burst region A and the fourth absolute value obtained by subtracting the burst region C from the burst region B:
(a14) calculating a first addition value by adding the first and second absolute values after (a2) and calculating a second addition value by adding the third and fourth absolute values after (a3); and
(a15) checking the degree to which the width of the servo sector is even using the first or second addition value, and proceeding to (a2).

4. The method of claim 2, wherein the smaller the width of the head, the more the predetermined distance approximates a quarter of the width of the track.

5. The method of claim 2, wherein the predetermined distance is a quarter of the width of the track.

6. The method of claim 3, wherein (a15) comprises:

checking whether the first or second addition value is the same as a predetermined value;
checking whether the first or second addition value is larger than the predetermined value when the first or second addition value is not the same as the predetermined value;
determining that the width of the servo sector is wider than a normal width when the first or second addition value is larger than the predetermined value;
determining that the width of the servo sector is narrower than a normal width when the first or second addition value is smaller than the predetermined value; and
determining that the width of the servo sector is even when the first or second addition value is the same as the predetermined value and proceeding to (a2).

7. The method of claim 1, wherein (b) comprises:

(b1) erasing the servo signals forming the track of an uneven width when the width of the track is not even; and

(b2) forming a track instead of the track erased in (b1) on the hard disc by writing the servo signals on the hard disc.

8. The method of claim 7, wherein (b) comprises:

(b3) checking whether a degree of the uneven width of the track falls within a predetermined range when the width of the track is not even, and returning back to (b1) if the degree of the uneven width falls within the predetermined range; and
(b4) determining that the track cannot be recovered when the degree of the uneven width does not fall within the predetermined range.

9. The method of claim 8, wherein (b) further comprises:

checking whether a total number of unrecoverable tracks is more than a predetermined number after (b4); and
determining the hard disc of the unrecoverable tracks as an inferior disc when the total number of the unrecoverable tracks is more than the predetermined value.

10. The method of claim 1, to be performed during testing of the hard disc having tracks.

11. An apparatus for preventing off tracking from occurring when a hard disc drive drives a hard disc having at least one track formed of servo sectors on which servo signals are recorded, the apparatus comprising:

a width checking unit for checking whether the width of the track is even using burst regions A, B, C, and D written on each servo sector and outputting the checking result; and
a controller for controlling the width measuring unit and preventing the occurrence of off tracking in response to the checking result.

12. The apparatus of claim 11, wherein the controller outputs a first control signal and a second control signal in response to the checking result, and a servo writer erases the servo signals, which forms the track of an uneven width, in response to the first control signal and forms a track, which is a substitute for the erased track by writing the servo signals on the hard disc in response to the second control signal.

13. The apparatus of claim 11, wherein the width measuring unit comprises:

a first width measuring unit for determining the degree to which the width of the servo sector is even using the burst regions A, B, C, and D that are read and input by a head of the hard disc drive, in response to a third control signal and a fourth control signal;
a second width measuring unit for measuring the width of the track using the measured widths of the servo sectors input from the first width measuring unit, in response to the third control signal, the widths of the track being formed of the servo sectors;
a range calculator for calculating an average range of the width of the track using the widths of the tracks input from the second width measuring unit, in response to the fourth control signal;
a comparator for comparing the width of the track input from the second width measuring unit and the average range input from the range calculator, and outputting the comparison result; and
a signal generator for generating an information signal and outputting the information signal as the checking result to the controller in response to the comparison result input from the comparator, the information signal indicating whether the width of the track is even,
wherein the controller generates the third control signal based on a result of checking whether a servo sector whose width is yet to be measured is present in the track, and generates the fourth control signal based on a result of checking whether there is a track whose width is yet to be measured, and
the head of the hard disc drive is moved to a predetermined distance in first and second directions and reads the burst regions A, B, C, and D in response to the third control signal, the first and second directions toward which the number of the track is increased and reduced, respectively.

14. A hard disc drive comprising an apparatus for preventing off tracking from occurring when the hard disc drive drives a hard disc having at least one track formed of servo sectors on which servo signals are recorded, the hard disc drive being arranged according to one of claims 11 to 13.

# FIG. 1

```
                    ( START )
                        |
                        v
           No      /            \        10
         <---------<  IS WIDTH OF >------/
         |          \ TRACK UNEVEN? /
         |           \            /
         |                |
         |              Yes
         |                |
         |                v
         |     +--------------------------+    12
         |     | PREVENT OCCURRENCE OF    |----/
         |     | OFF TRACKING IN ADVANCE  |
         |     +--------------------------+
         |                |
         |--------------->|
                          v
                      ( END )
```

# FIG. 2

# FIG. 3

# FIG. 4

10A

START

MEASURE WIDTH OF
EACH SERVO SECTOR ───70

72
IS SERVO SECTOR WHOSE WIDTH IS
YET TO BE MEASURED PRESENT?

Yes

No

MEASURE WIDTH OF TRACK USING
WIDTHS OF SERVO SECTORS ───74

76
DOES ANY TRACK WHOSE WIDTH IS
YET TO BE MEASURED REMAIN?

Yes

No

CALCULATE AVERAGE RANGE OF
WIDTH OF TRACK ───78

80
DOES WIDTH OF
TRACK DEVIATE FROM AVERAGE
RANGE WHEN COMPARED TO MEASURED
WIDTH OF TRACK AND
AVERAGE RANGE

Yes

To 12

No

END

# FIG. 5

70A

START

90

IS TRACK
ODD NUMBERED OR
EVEN NUMBERED?

EVEN NUMBER

ODD NUMBER

92

MOVE HEAD AND CALCULATE FIRST
AND SECOND ABSOLUTE VALUES

94

MOVE HEAD AND CALCULATE THIRD
AND FOURTH ABSOLUTE VALUES

CALCULATE FIRST OR SECOND
ADDITION VALUE — 96

DETERMINE THE EXTENT TO WHICH
WIDTHS OF SERVO SECTORS ARE EVEN — 98

To 72

# FIG. 6

FIRST DIRECTION

100

A    B    C    D

102

104

106

107

105

108

SECOND DIRECTION

110
112
120
122
124
126
114
116

# FIG. 7

98A

START

140 — IS FIRST OR SECOND ADDITION VALUE THE SAME AS PREDETERMINED VALUE?

Yes / No

144 — IS FIRST OR SECOND ADDITION VALUE LARGER THAN PREDETERMINED VALUE?

No

Yes

142 — DETERMINE WIDTH OF SERVO SECTOR TO BE EVEN

146 — DETERMINE THAT WIDTH OF SERVO SECTOR IS HIGHER THAN NORMAL WIDTH

148 — DETERMINE THAT WIDTH OF SERVO SECTOR IS SMALLER THAN NORMAL WIDTH

To 72

EP 1 361 578 A1

# FIG. 8

VALUE

DIRECTION TOWARD
WHICH WIDTH DECREASES

NORMAL WIDTH

DIRECTION TOWARD
WHICH WIDTH INCREASES

# FIG. 9

12A

START

160

DOES DEGREE OF
UNEVEN WIDTH OF TRACK
FROM PREDETERMINED DEVIATE
RANGE?

Yes

No

164

ERASE SERVO SIGNALS FORMING
TRACK OF UNEVEN WIDTH

162

DETERMINE TRACK TO
BE UNRECOVERABLE

166

REWRITE SERVO SIGNALS TO
FORM TRACK

END

# FIG. 10

EP 1 361 578 A1

# FIG. 11

(a)

WIDTH OF TRACK

(b)

WIDTH OF TRACK

EP 1 361 578 A1

**European Patent Office**

# EUROPEAN SEARCH REPORT

Application Number

EP 03 01 0607

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 381 281 A (SHRINKLE LOUIS J ET AL) 10 January 1995 (1995-01-10) * column 1, line 47 - column 16, line 32; figures * | 1-14 | G11B27/36 G11B5/596 |
| X | US 6 043 951 A (LEE HAE-JOUNG) 28 March 2000 (2000-03-28) | 1,11,14 | |
| A | * column 3, line 50 - column 9, line 35; figures * | 2-10,12, 13 | |
| X | US 5 995 305 A (KOUDELE LARRY ET AL) 30 November 1999 (1999-11-30) | 1,11,14 | |
| A | * column 2, line 44 - column 3, line 17 * | 2-10,12, 13 | |
| | * column 13, line 66 - column 14, line 32 * | | |

|  |  |
|---|---|
| | TECHNICAL FIELDS SEARCHED (Int.Cl.7) |
| | G11B |

The present search report has been drawn up for all claims

| Place of search | Date of completion of the search | Examiner |
|---|---|---|
| MUNICH | 10 July 2003 | D'Attilia, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**EP 1 361 578 A1**

## ANNEX TO THE EUROPEAN SEARCH REPORT
## ON EUROPEAN PATENT APPLICATION NO.

EP 03 01 0607

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2003

| Patent document cited in search report | | Publication date | Patent family member(s) | | Publication date |
|---|---|---|---|---|---|
| US 5381281 | A | 10-01-1995 | DE | 69028407 D1 | 10-10-1996 |
| | | | DE | 69028407 T2 | 16-01-1997 |
| | | | EP | 0494869 A1 | 22-07-1992 |
| | | | JP | 5501170 T | 04-03-1993 |
| | | | WO | 9102354 A1 | 21-02-1991 |
| US 6043951 | A | 28-03-2000 | DE | 19735986 A1 | 05-03-1998 |
| US 5995305 | A | 30-11-1999 | US | 6404570 B1 | 11-06-2002 |
| | | | AU | 1430595 A | 19-06-1995 |
| | | | EP | 0740830 A1 | 06-11-1996 |
| | | | JP | 9507603 T | 29-07-1997 |
| | | | WO | 9515552 A1 | 08-06-1995 |

EPO FORM P0459

For more details about this annex : see Official Journal of the European Patent Office, No. 12/82